# EUROPEAN PATENT APPLICATION

(11) **EP 4 641 271 A2**
(43) Date of publication of application: **29.10.2025**
(21) Application number: 25201821.3
(22) Date of filing: 12.09.2025
(51) Int. Cl.: G02B 6/38

(54) **OPTICAL-FIBER CONNECTOR**

(30) Priority: 24.10.2024 CN 202422584582 U
(71) Applicant: Acon Optics Communications Inc., New Taipai City 231 (TW)
(72) Inventor: CUI, Yang-Yang, 231 New Taipei City (TW)
(74) Representative: Viering, Jentschura & Partner mbB Patent- und Rechtsanwälte

(57) **Abstract**

The optical-fiber connector (100) includes a base portion (2), optical-fiber connector portions (1), and a connecting portion (104). The optical-fiber connector portions (1) are disposed in mounting spaces (20) of the base portion (2). Each of the optical-fiber connector portions (1) includes a housing (10) and an optical-fiber component (12). The housing (10) includes an extension arm (100) and a connecting portion (104), the extension arm (100) is disposed at the housing (10) and extends obliquely, and the connecting portion (104) is formed as an extension of the extension arm (100) and defines an actuation space (106) having an inclined inner wall (1060). The rear cover portion (3) is fitted over the base portion (2) and includes a latching member (30) disposed on the rear cover portion (3). The latching member (30) includes a support member (300), a first rod (302), and a second rod (304). The support member (300) extends upwardly from the top surface of the rear cover portion (3). The first rod (302) and the second rod (304) are respectively disposed on opposite sides of the support member (300).

## Description

### FIELD OF THE INVENTION

The instant disclosure relates to a connector, and more particular to an optical-fiber connector.

### BACKGROUND

The optical-fiber cable serves as a tool for light transmission. In order to enable the optical-fiber cable to be connected to various electronic devices so that the information transmitted through the optical fiber can be utilized by such electronic devices, a connector is provided to serve as an interface between the optical-fiber cable and the electronic devices, thereby achieving the purpose of connection.

An optical-fiber connector assembly known to the inventor includes a female adapter and male optical-fiber connector mated with the female adapter. The female adapter is mounted on the electronic device, and when the male optical-fiber connector is inserted into the female adapter, a connection is established between the female adapter and the optical-fiber connector, thereby achieving mechanical retention between the adapter and the connector and enabling data transmission.

With the expansion of data centers and the increasing number of devices requiring interconnection, the available space for mating the adapter with the connector in each optical-fiber connector assembly has become limited. In such confined cabinet environments, when it is necessary to replace a set of optical-fiber connector assembly (where one set includes an adapter and a connector), it is often difficult for a user's hand to properly press the resilient arms on the male optical-fiber connector. As a result, the resilient arms cannot be disengaged from the latching structures of the female adapter, making it difficult to remove the cable. Moreover, even if the cable can be removed, the cable itself or adjacent cables may be damaged, and the number of cables capable of being routed within the cabinet is also reduced due to the limited space.

Currently, the market has addressed the aforementioned issue by employing a pull-tab structure, which extends outward to enable the male optical-fiber connector to be pulled out more easily. However, the pull-tab itself is merely a single elongated member positioned above the male optical-fiber connector, and the connection between the male connector and the pull-tab structure is only at the resilient arms which are located at the front end of the male optical-fiber connector. To avoid the pull-tab structure from being excessive bulky, the pull-tab structure is designed to be relatively thin and narrow, which makes the pull-tab structure prone to deformation or breakage after prolonged use or improper pulling operations. Therefore, how to overcome the shortcomings of the conventional structure known to the inventor remains an issue that needs to be addressed.

### SUMMARY OF THE INVENTION

The instant disclosure is to provide a optical-fiber connector, which is intended to solve the aforementioned technical problems.

In view of these, an embodiment of the instant disclosure provides an optical-fiber connector comprising: a plurality of LC optical-fiber connector portions, a base portion, and a cover. Each of the LC optical-fiber connector portions includes a housing and an optical-fiber component mounted in the housing, wherein the housing has an extension arm, a latch portion, and a connecting portion. The extension arm is disposed at one of two ends of a top surface and extending toward the other end of the top surface, the latch portion is connected to the extension arm, and the connecting portion extends from the latch portion. The connecting portion defines an actuation space, and an inclined inner wall is defined in the actuation space. The inclined inner wall defines a first positioning point at one side of the inclined inner wall adjacent to the latch portion and a second positioning point at one side of the inclined inner wall away from the latch portion. The LC optical-fiber connectors are arranged side by side on the base portion. The cover is fitted over the base portion, a latching member is on a top surface of the cover, the latching member includes a first rod inserted into the actuation space of one of the LC optical-fiber connectors and a second rod inserted into the actuation space of another one of the LC optical-fiber connectors. The cover is configured to be moved laterally relative to the base portion by pulling, such that the first rod and the second rod are moved between the first positioning point and the second positioning point by abutting against the inclined inner walls, thereby changing the operational state of the extension arms.

In view of these, an embodiment of the instant disclosure provides an optical-fiber connector. The optical-fiber connector includes a base portion, a plurality of optical-fiber connector portions, and a connecting portion. The optical-fiber connector portions are disposed in respective mounting spaces of the base portion. Each of the optical-fiber connector portions includes a housing and an optical-fiber component. The housing includes an extension arm that is disposed at one end of a top surface of the housing and extends obliquely upward from the top surface. The housing includes a connecting portion. The connecting portion is formed as an extension of the extension arm and defines an actuation space having an inclined inner wall. The rear cover portion is fitted over the base portion. The rear cover portion includes a latching member disposed on a top surface of the rear cover portion. The latching member includes a support member, a first rod, and a second rod. The support member extends upward from the top surface of the rear cover portion. The first rod and the second rod are respectively disposed on opposite sides of the support member. The first rod is positioned within the actuation space of one of the optical-fiber connector portions. The second rod is positioned within the actuation space of another optical-fiber connector portion. When the rear cover portion is pulled in a rearward direction, the rear cover portion is driven to move rearward relative to the base portion, thereby driving the first rod and the second rod to slide along the inclined inner wall, such that an operational state of the connecting portions is changed.

In some embodiments, each of two opposite lateral sides of the extension arm comprises a latch portion connected to the extension arm, and each of the latch portions is disposed on a corresponding one of the lateral sides of the connecting portion and is positioned in front of the actuation space.

In some embodiments, the inclined inner wall defines a first positioning point at one side of the inclined inner wall adjacent to the latch portion and defines a second positioning point at one side of the inclined inner wall away from the latch portion.

In some embodiments, the rear cover portion is configured as a sliding member that is slidable relative to the base portion.

In some embodiments, when the rear cover portion is pulled in a rearward direction, the rear cover portion is driven to move rearward relative to the base portion, thereby driving the first rod and the second rod to slide along the inclined inner wall from the first positioning point to the second positioning point so as to change the operational state of the connecting portion and the extension arms.

In some embodiments, the height of the support member allows the first rod and the second rod to remain at a uniform elevation at the first positioning point without applying a contact force to the inclined inner wall.

In some embodiments, the rear cover portion defines a sleeve opening and an accommodating space for accommodating the base portion.

In some embodiments, limiting openings are respectively defined on opposite sides of the rear cover portion and respectively correspond to limiting portions respectively formed on both sides of the base portion.

In some embodiments, the limiting openings limit the range of movement of the limiting portions, thereby controlling the relative position of the rear cover portion with respect to the base portion.

In some embodiments, when the optical-fiber connector is assembled with an adapter, the first rod and the second rod of the optical-fiber connector portions are positioned at the first positioning point, such that the latch portion is engaged with a latch groove of the adapter and maintained in a locked state, and the limiting portions do not interfere with the limiting openings.

In some embodiments, when the optical-fiber connector is removed from the adapter, the rear cover portion is pulled in the reward direction and moves rearward relative to the base portion, the first rod and the second rod positioned within the actuation space of the optical-fiber connectors move from the first positioning point to the second positioning point by abutting against the inclined inner wall.

In some embodiments, the latch portion is disengaged from the latch groove of the adapter and enters into an unlocked state.

In some embodiments, in the unlocked state, the limiting portions abut against the limiting openings to prevent the rear cover portion from separating from the base portion.

In some embodiments, in the unlocked state, the position of the extension arms is shifted closer to the top surface of the housing.

In some embodiments, a pair of optical-fiber connector portions are first assembled onto the base portion, and thereafter the rear cover portion is fitted over the peripheral portion of the base portion.

In some embodiments, during use, the optical-fiber connector is directly inserted into an insertion space of an adapter, and the latch portions on the optical-fiber connector portions engage with latch grooves defined within the insertion space of the adapter, thereby preventing the optical-fiber connector from disengaging from the adapter and ensuring stable signal transmission.

In some embodiments, when the optical-fiber connector is assembled with the adapter, the first rod and the second rod of the optical-fiber connector portions are positioned at the first positioning point, such that the latch portion is engaged with the latch groove of the adapter and is maintained in a locked state.

In some embodiments, each of the optical-fiber connector portions further comprises an optical-fiber transmission cable that is connected to the optical-fiber component and is accommodated in an accommodating groove of the housing.

### BRIEF DESCRIPTION OF THE SEVERAL VIEWS OF THE DRAWING(S)

The instant disclosure will become more fully understood from the detailed description given herein below for illustration only, and thus not limitative of the instant disclosure, wherein:
Fig. 1 illustrates a schematic view showing an optical-fiber connector according to an exemplary embodiment of the instant disclosure;
Fig. 2 illustrates an exploded schematic view showing an optical-fiber connector according to an exemplary embodiment of the instant disclosure;
Fig. 3 illustrates a schematic top view showing two LC optical-fiber connector portions and an adapter according to an exemplary embodiment of the instant disclosure;
Fig. 4 illustrates a schematic cross-sectional view showing two LC optical-fiber connector portions and an adapter after the adapter is assembled according to an exemplary embodiment of the instant disclosure; and
Fig. 5 illustrates a schematic cross-sectional view showing an operation in which the rear cover portion is pulled rearward to move the extension arms downward and disengage the connector portions from the adapter according to an exemplary embodiment of the instant disclosure.

### DETAILED DESCRIPTION

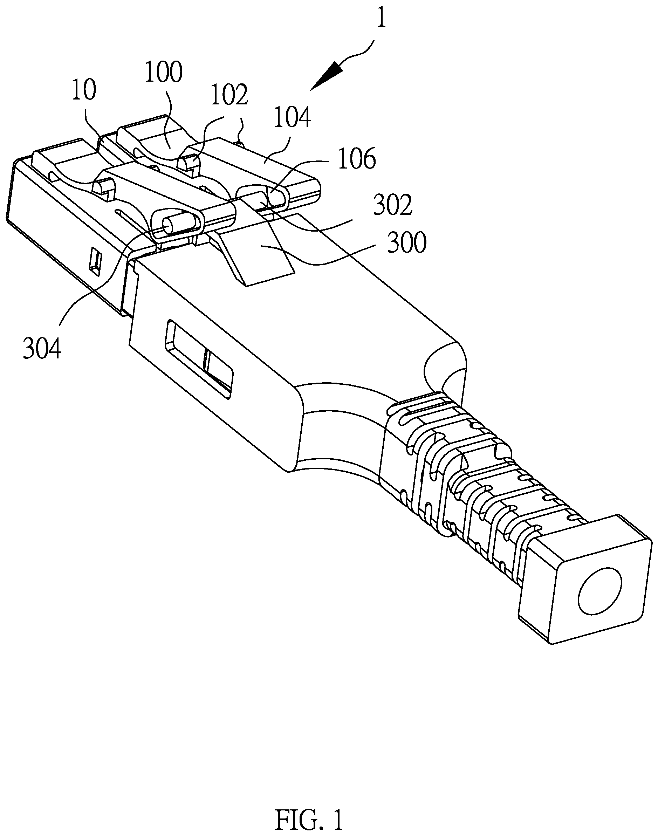

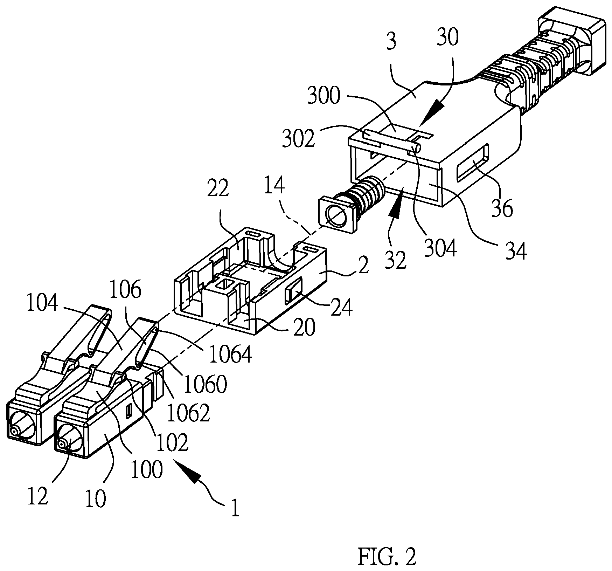

Please refer to Fig. 1 and Fig. 2 Fig. 1 and Fig. 2 respectively illustrate a perspective view and an exploded perspective view of an exemplary embodiment according to the instant disclosure. The instant disclosure provides an optical-fiber connector, which mainly includes a plurality of LC optical-fiber connector portions 1, a base portion 2, and a rear cover portion 3. Each of the LC optical-fiber connector portions 1 is disposed within a corresponding one of mounting spaces 20 defined in the base portion 2, such that the LC optical-fiber connector portions 1 are arranged adjacently. Each of the LC optical-fiber connector portions 1 includes a housing 10, an optical-fiber component 12, and an optical-fiber transmission cable 14. The optical-fiber transmission cable 14 connected to the optical-fiber component 12 is accommodated in an accommodating groove 22 of the housing 10, after which the rear cover portion 3 is fitted over the base portion 2. The optical-fiber component 12 mainly includes a ferrule, a ceramic tube, a spring, and a sleeve member. The ceramic tube is configured to encase an optical fiber and align the end face of the optical fiber with the bore of the sleeve. The ferrule is located at one of two ends of the ceramic tube. One of two ends of the sleeve member is fitted over the other end of the ceramic tube, and the other end of the sleeve member is connected to the optical-fiber transmission cable 14 (shown as a single conceptual element). The sleeve member is fixed at a rear end of the base portion 2. The spring is fitted over the other end of the ceramic tube and disposed within the sleeve member, with one of two ends of the spring abutting against the ceramic tube and the other end of the spring abutting against the sleeve member. The spring provides a cushioning effect to the ceramic tube.

The housing 10 includes an extension arm 100 that is disposed at one end of a top surface of the housing 10 and extends obliquely upward from the top surface of the housing 10. Each of two opposite lateral sides of the extension arm 100 includes a latch portion 102 connected to the extension arm 100 and a connecting portion 104 formed as an extension of the extension arm 100. The connecting portion 104 defines an actuation space 106 having an inclined inner wall 1060. The inclined inner wall 1060 defines a first positioning point 1062 located at one side of the inclined inner wall 1060 adjacent to the latch portion 102, and the inclined inner wall 1060 defines a second positioning point 1064 at one side of the inclined inner wall 1060 away from the latch portion 102. The latch portion 102 is disposed on each of two lateral sides of the connecting portion 104 and is positioned in front of the actuation space 106.

The rear cover portion 3 is fitted over the base portion 2 and configured as a sliding member slidable relative to the base portion 2. The rear cover portion 3 includes a latching member 30 disposed on a top surface of the rear cover portion 3. The latching member 30 includes a support member 300, a first rod 302, and a second rod 304. The support member 300 extends upward from the top surface of the rear cover portion 3, while the first rod 302 and the second rod 304 are respectively disposed on opposite sides of the support member 300. The first rod 302 is positioned within the actuation space 106 of one of the LC optical-fiber connector portions 1, and the second rod 304 is positioned within the actuation space 106 of another LC optical-fiber connector portion 1. When the rear cover portion 3 is pulled in a rearward direction, the rear cover portion 3 is driven to move rearward relative to the base portion 2, thereby driving the first rod 302 and the second rod 304 to slide along an inclined inner wall 1060 from a first positioning point 1062 to a second positioning point 1064, such that an operational state of the connecting portion 104 and the extension arms 100 is changed. The height of the support member 300 allows the first rod 302 and the second rod 304 to remain at a uniform elevation at the first positioning point 1062, without applying a contact force to the inclined inner wall 1060.

The rear cover portion 3 defines a sleeve opening 32 and an accommodating space 34 for accommodating the base portion 2. Limiting openings 36 are respectively defined on opposite sides of the rear cover portion 3 and respectively correspond to limiting portions 24 respectively formed on both sides of the base portion 2. The limiting openings 36 limit the range of movement of the limiting portions 24, thereby controlling the relative position of the rear cover portion 3 with respect to the base portion 2.

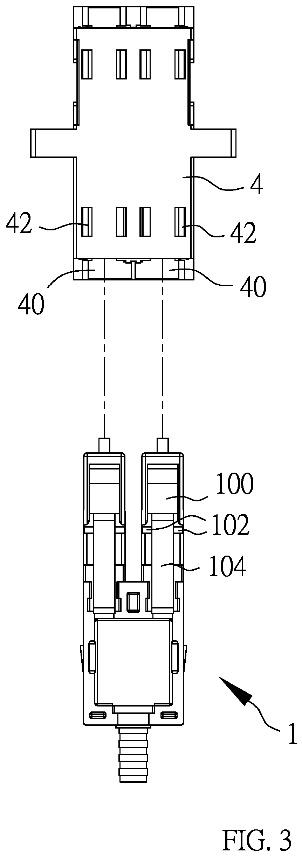

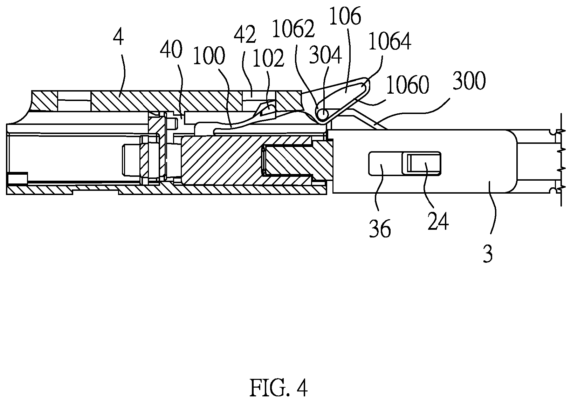

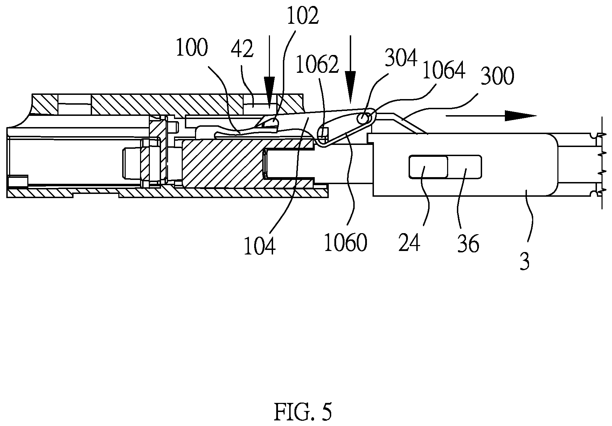

Please refer to Fig. 3, Fig. 4, and Fig. 5. Fig. 3, Fig. 4, and Fig. 5 respectively illustrate a top view of the LC optical-fiber connector portions and the adapter prior to assembly, a cross-sectional view after the adapter is assembled, and a cross-sectional view showing an operation in which the rear cover portion is pulled rearward to move the extension arms downward and disengage the connector portions from the adapter. In the instant disclosure, a pair of LC optical-fiber connector portions 1 are first assembled onto the base portion 2, and then the rear cover portion 3 is fitted over the peripheral portion of the base portion 2. During use, the optical-fiber connector can be directly inserted into an insertion space 40 of an adapter 4. Upon full insertion, the latch portions 102 on the LC optical-fiber connector portions 1 are engaged with latch grooves 42 defined within the insertion space 40 of the adapter 4, thereby preventing the LC optical-fiber connector portions 1 from disengaging from the adapter 4 and ensuring stable signal transmission.

As described above, when the LC optical-fiber connector portions 1 are fully assembled with the adapter 4, the first rod 302 and the second rod 304 of the LC optical-fiber connector portions 1 are positioned at the first positioning point 1062, such that the latch portion 102 is engaged with the latch groove 42 and maintained in a locked state. At this time, the limiting portions 24 do not interfere with the limiting openings 36, and the extension arms 100 remain stationary, that is, in this embodiment, the extension arms 100 are positioned away from the top surface of the housing 10 in accordance with the locked state. The height of the support member 300 located on the rear cover portion 3 is configured in a manner such that when the first rod 302 and the second rod 304 are positioned at the first positioning point 1062, the first rod 302 and the second rod 304 maintain the same height without applying any bearing force against the inclined inner wall 1060.

When the LC optical-fiber connector portions 1 are removed from the adapter 4, the rear cover portion 3, which is fitted over the base portion 2 is pulled in a direction opposite to the insertion direction of the LC optical-fiber connector portions 1. When the rear cover portion 3 is pulled and moved rearward relative to the base portion 2, the first rod 302 and the second rod 304 positioned in the actuation space 106 of the LC optical-fiber connectors 1 are moved from the first positioning point 1062 to the second positioning point 1064 by abutting against the inclined inner wall 1060. As a result, the latch portion 102 is disengaged from the latch groove 42 and enters into an unlocked state. At this time, the limiting portions 24 abut against the limiting openings 36 to prevent the rear cover portion 3 from separating from the base portion 2. In the unlocked state, the position of the extension arms 100 is shifted closer to the top surface of the housing 10.

As described above, one or some embodiments of the instant disclosure primarily achieves rearward movement of the rear cover portion 3 relative to the base portion 2 by pulling the rear cover portion 3, such that the first rod 302 and the second rod 304 are moved between the first positioning point 1062 and the second positioning point by abutting against the inclined inner wall 1060, thereby changing the operational state of the extension arms 100. When the LC optical-fiber connector portions 1 are inserted into the adapter 4, the rear cover portion 3 is located away from the adapter 4. Therefore, even in densely packed configurations of the adapter 4, spaces still exist between adjacent rear cover portions 3 of the LC optical-fiber connector portions 1, and the rear cover portion 3 thus can still be conveniently pulled to smoothly remove the LC optical-fiber connector portions 1 from the adapter 4.

## Claims

1. An optical-fiber connector (100) comprising:
a base portion (2);
a plurality of optical-fiber connector portions (1) disposed in respective mounting spaces (20) of the base portion (2), wherein each of the optical-fiber connector portions (1) comprises a housing (10) and an optical-fiber component (12), the housing (10) comprises an extension arm (100) and a connecting portion (104), the extension arm (100) is disposed at one end of a top surface of the housing (10) and extends obliquely upward from the top surface, and the connecting portion (104) is formed as an extension of the extension arm (100) and defines an actuation space (106) having an inclined inner wall (1060); and
a rear cover portion (3) fitted over the base portion (2); wherein the rear cover portion (3) comprises a latching member (30) disposed on a top surface of the rear cover portion (3), the latching member (30) comprises a support member (300), a first rod (302), and a second rod (304), the support member (300) extends upwardly from the top surface of the rear cover portion (3), the first rod (302) and the second rod (304) are respectively disposed on opposite sides of the support member (300), the first rod (302) is positioned within the actuation space (106) of one of the optical-fiber connector portions (1), the second rod (304) is positioned within the actuation space (106) of another optical-fiber connector portion (1); wherein when the rear cover portion (3) is pulled in a rearward direction, the rear cover portion (3) is driven to be moved rearward relative to the base portion (2), thereby driving the first rod (302) and the second rod (304) to slide along the inclined inner wall (1060), such that an operational state of the connecting portions (104) is changed.

2. The optical-fiber connector (100) as claimed in claim 1, wherein each of two opposite lateral sides of the extension arm (100) comprises a latch portion (102) connected to the extension arm (100), and each of the latch portions (102) is disposed on a corresponding one of the lateral sides of the connecting portion (104) and is positioned in front of the actuation space (106).

3. The optical-fiber connector (100) as claimed in claim 2, wherein the inclined inner wall (1060) defines a first positioning point (1062) at one side of the inclined inner wall (1060) adjacent to the latch portion (102) and defines a second positioning point (1064) at one side of the inclined inner wall (1060) away from the latch portion (102).

4. The optical-fiber connector (100) as claimed in claim 1, wherein the rear cover portion (3) is configured as a sliding member that is slidable relative to the base portion (2).

5. The optical-fiber connector (100) as claimed in claim 3, wherein when the rear cover portion (3) is pulled in a rearward direction, the rear cover portion (3) is driven to move rearward relative to the base portion (2), thereby driving the first rod (302) and the second rod (304) to slide along the inclined inner wall (1060) from the first positioning point (1062) to the second positioning point (1064) so as to change the operational state of the connecting portion (104) and the extension arms (100).

6. The optical-fiber connector (100) as claimed in claim 3, wherein the height of the support member (300) allows the first rod (302) and the second rod (304) to remain at a uniform elevation at the first positioning point (1062) without applying contact force to the inclined inner wall (1060).

7. The optical-fiber connector (100) as claimed in claim 1, wherein the rear cover portion (3) defines a sleeve opening (32) and an accommodating space (34) for accommodating the base portion (2).

8. The optical-fiber connector (100) as claimed in claim 3, wherein limiting openings (36) are respectively defined on opposite sides of the rear cover portion (3) and respectively correspond to limiting portions (24) respectively formed on both sides of the base portion (2).

9. The optical-fiber connector (100) as claimed in claim 8, wherein the limiting openings (36) limit the range of movement of the limiting portions (24), thereby controlling the relative position of the rear cover portion (3) with respect to the base portion (2).

10. The optical-fiber connector (100) as claimed in claim 8, wherein when the optical-fiber connector (100) is assembled with an adapter (4), the first rod (302) and the second rod (304) of the optical-fiber connector portions (1) are positioned at the first positioning point (1062), such that the latch portion (102) is engaged with a latch groove (42) of the adapter (4) and is maintained in a locked state, and the limiting portions (24) do not interfere with the limiting openings (36).

11. The optical-fiber connector (100) as claimed in claim 10, wherein when the optical-fiber connector (100) is removed from the adapter (4), the rear cover portion (3) is pulled in the rearward direction and moves rearward relative to the base portion (2), the first rod (302) and the second rod (304) positioned within the actuation space (106) of the optical-fiber connectors (1) move from the first positioning point (1062) to the second positioning point (1064) by abutting against the inclined inner wall (1060).

12. The optical-fiber connector (100) as claimed in claim 11, wherein the latch portion (102) is disengaged from the latch groove (42) of the adapter (4) and enters into an unlocked state.

13. The optical-fiber connector (100) as claimed in claim 12, wherein, in the unlocked state, the limiting portions (24) abut against the limiting openings (36) to prevent the rear cover portion (3) from separating from the base portion (2).

14. The optical-fiber connector (100) as claimed in claim 12, wherein, in the unlocked state, the position of the extension arms (100) is shifted closer to the top surface of the housing (10).

15. The optical-fiber connector (100) as claimed in claim 1, wherein a pair of optical-fiber connector portions (1) are first assembled onto the base portion (2), and thereafter the rear cover portion (3) is fitted over the exterior of the base portion (2).

16. The optical-fiber connector (100) as claimed in claim 2, wherein during use, the optical-fiber connector (100) is directly inserted into an insertion space (40) of an adapter (4), and the latch portions (102) on the optical-fiber connector portions (1) engage with latch grooves (42) defined within the insertion space (40) of the adapter (4), thereby preventing the optical-fiber connector (100) from disengaging from the adapter (4) and ensuring stable signal transmission.

17. The optical-fiber connector (100) as claimed in claim 16, wherein, when the optical-fiber connector (100) is assembled with the adapter (4), the first rod (302) and the second rod (304) of the optical-fiber connector portions (1) are positioned at the first positioning point (1062), such that the latch portion (102) is engaged with the latch groove (42) of the adapter (4) and is maintained in a locked state.

18. The optical-fiber connector (100) as claimed in claim 1, wherein each of the optical-fiber connector portions (1) further comprises an optical-fiber transmission cable (14) that is connected to the optical-fiber component (12) and is accommodated in an accommodating groove (22) of the housing (10).
